# EUROPEAN PATENT APPLICATION

(11) **EP 4 807 810 A1**
(43) Date of publication of application: **16.09.2026**
(21) Application number: 26161565.2
(22) Date of filing: 02.03.2026
(51) Int. Cl.: H01M 4/58, H01M 4/136, H01M 4/38

(54) **LOW-TORTUOUS GLASS-CRYSTALLINE CHALCOGENIDE-BASED ELECTRODE WITH ORDERED POROSITY INDUCED BY IRRADIATION PROCESSES AND METHOD OF PRODUCING THEREOF**

(30) Priority: 13.03.2025 LU 103555
(71) Applicant: Theion GmbH, 12487 Berlin (DE)
(72) Inventor: Slavik, Marek, 12487 Berlin (DE); Puget , Marin, 12487 Berlin (DE); Waidha, Aamir Iqbal, 12487 Berlin (DE)
(74) Representative: Tegethoff, Sebastian

(57) **Abstract**

A low tortuosity glass-crystalline 3D chalcogenide cathode exhibiting hierarchical/ordered porosity and method for preparing such a electrode body for use in secondary batteries, comprising the steps of providing an chalcogenide-based, substrate (201), selectively inducing the conversion of the chalcogenide body into suitable allotropic forms having different physicochemical properties by applying structurally patterning the substrate (201) by means of photon and or electron irradiation source, wherein the irradiation treated area of the crystalline chalcogenide body is pre-dominantly transitioned into glass/amorphous allotropic forms (204) defined as in-soluble in suitable solvent/etching agents and masked/protected area of the chalcogenide body stays crystalline (202a) which is defined as soluble in suitable solvent/etching agent - otherwise defined as negative lithography wherein, the high-energy radiation is directed onto the substrate (201) in an orientation largely perpendicular to the widest extension of the substrate (201).

## Description

The present patent application is directed at a 3D porous chalcogenide electrode body and a method of producing thereof, as described in the patent claims enclosed herewith.

There is a growing demand for next generation high energy density storage devices, which are also environmentally benign. Current state of art (SoA) lithium-ion batteries (LIBs) are usually based on transition metal-based cathodes produced by slurry coating and/or dry extrusion processes, which have almost reached their potential limits with respect to volumetric and gravimetric energy density.

To overcome the limitations of conventional LIBs, several alternative storage technologies have been at the fore front of research and development, especially with respect to new cathode chemistries. Amongst them chalcogenide-based cathodes, for example sulfur-based cathodes, have generated quite some interest due to their high theoretical specific capacity, which enables storage devices with theoretical gravimetric (2600 Wh/kg) and volumetric energy (2800 Wh/1) densities, which is well beyond the state of art LIBs.

In pursuit of developing an innovative cathode for lithium-sulfur (Li-S) batteries, a series of meticulously optimized parameters must be diligently addressed for enhancement of sulfur cathodes in energy storage technology.

Conventional sulfur-based cathodes are mostly derived from carbon composites, wherein the cathode active material, i.e. sulfur, is impregnated into a carbon host via heating/melt diffusion strategy followed by introduction of this composite into a slurry containing a binder and an electronic conductive additive to from a cathode film on top of a current collector foil, like, but not limited to, aluminium.

In comparison to the transition-based intercalation/insertion based cathodes, the multistep redox conversion-based chalcogenide cathodes or more specifically a sulfur cathode, a significant mass content of the non-active material, i.e. electron conducting agent and a binder needs to be added into the sulfur cathode. This leads to low compact density of nano-sulfur based cathodes, i.e. ~ 0.58 g/cm³ against SoA NMC cathode, i.e. ~3.5 g/cm³.

Hence, the easiest and cheapest way to increase cell energy thereof, is to decrease the presence of dead volume/weight within a cell, therefore.

A strategy for sulfur cathode preparation is described for example in Chinese patent CN118039833A, wherein a core-shell approach is used, sulfur is present within a carbon nanotube core and is covered by a TiO₂ shell. The drawback of this approach is the significant weight fraction of the TiO₂ amounting 10-15% of the total weight of the positive electrode, i.e. cathode. Moreover, said document does not reveal the final cathode preparation strategy and the volume fraction of porosity, both of which influence the specific and volumetric energy density.

Similarly, Chinese patent CN116565178A describes an alternative sulfur containing cathode comprising a composite of molybdenum and graphene oxide as additional additives as well as ball milling and high temperature treatment between 550 and 850 °C. This composite is then mixed with carbon powder as a conductive agent, using polyvinylidene fluoride (PVDF) as an adhesive, mixed with nitrogen methyl pyrrolidone solvent (NMP) and casted in form of a slurry onto an aluminium current collector to form a slurry-based cathode.

Here, again, the final sulfur weight fraction in the cathode obtained is low and displays a random distribution of pores within the cathode prepared by the slurry coating process, which influences the electrolyte to sulfur (E/S) ratio and limits the energy density obtained with such a cathode.

Moreover, the porosity of sulfur cathodes prepared via a slurry-based process has been reported to be within a range of 40-70%, see "Gravimetric and volumetric energy densities of lithium-sulfur batteries" W. Xue et al., Current Opinion in Electrochemistry Volume 6, Issue 1, December 2017, Pages 92-99, Elsevier, which is significantly higher than the usual transition metal-based cathodes, namely ≤ 25%.

This implies use of a high amount of non-redox active electrolyte, which reduces the specific energy density of the resulting cell. In case of sulfur, the accessibility of sulfur to the electrolyte plays an important role towards the utilization factor, i.e. discharge capacity that can be obtained from a cathode, see "Cathode porosity is a missing key parameter to optimize lithium-sulfur battery energy density" n. Kang et al., Nature Communications 10, Article number: 4597 (2019), wherein 50% porosity of the slurry-based cathode has been deemed optimal for the slurry-based sulfur cathode. However, this amount of porosity is required for cathodes prepared via slurry-based processes only. To obtain a suitable high energy density chalcogenide-based cathode, not only the amount of active chalcogenide, more preferably sulfur, but also the weight fraction of non-active components and volume percentage of porosity needs to be optimized. In addition, the tortuosity of the lithium-ions within the cathode is also important for efficient use of the cathode active material, wherein a low tortuosity means shorter paths between the two points and is known to be beneficial for cathode performance, see "Low-tortuous and dense single-particle-layer electrode for high-energy lithium-sulfur batteries" S. Feng et al., Energy & environmental Sciene Issue 9, 2022.

While Li-S batteries are a promising energy storage technology with the potential for high energy density and lower costs compared to traditional LIBs, they also suffer from several disadvantages and challenges that researchers and industry are actively working to address.

The current cathode fabrication for Li-S batteries utilizes a conventional slurry coating method based on particles, aggregates, and clusters (PACs). Initially, a carbon sulfur composite is prepared, wherein the sulfur is first infused within micro/meso/macro porous carbon host-structures followed by mixing with conductive carbon additives and a binder.

This method usually leads to an active sulfur content below 67 wt% within the whole cathode, therefore reducing the gravimetric energy density due to low amount of the active material content. In addition, the distribution of porosity is random, which means the accessibility of the electrolyte towards the active sulfur is limited. Hence, there can exist dead volume within the cathode that is not accessible to the electrolyte.

Overall, the result is low volumetric energy density, due to the high content of carbon additives which have low packing density along with low sulfur utilization during electrochemical processes, which reduces the gravimetric energy density. Moreover, the high volume and open porosity (more than 50%) also leads to excess utilization of the non-active electrolyte (≥10 µl of electrolyte for each mg of sulfur), which lowers the gravimetric energy density even further.

An additional issue which severely effects the performance of SoA Li-S batteries is the so-called lithium poly shuttle effect. This is due to the dissolution of long chain lithiated sulfur intermediates, i.e. Li₂Sₓ (X=4-6), which are soluble in common ether-based electrolytes and their shuttle towards the metallic anode, where they are reduced further to form short chain non-soluble insulating polysulfides Li₂Sₓ (X=1-3), thus, forming an insulating layer on top of the anode and preventing the operation of the battery.

Moreover, this shuttling leads to loss of active sulfur and its redistribution, hence leading to overall capacity fading of the battery and reduced performance over time. The insulating nature of sulfur (≥10⁻³⁰ S cm²) implies that such batteries also struggle to deliver high power output or charge/discharge at high rates, in addition to the requirement of high amounts of electronic conductive additives. This limitation makes them less suitable for applications requiring rapid energy transfer.

Further, during charge and discharge, sulfur undergoes significant volume changes (80%), which can lead to mechanical stress and deformation within the battery or in general pulverization of the sulfur cathode. This can result in electrode cracking and capacity loss over time.

The object of the invention therefore is to provide a method for preparing a chalcogenide/sulfur material electrode body/wafer for use in secondary batteries, an electrode with such an electrode body, and a battery containing such electrodes, overcoming the drawbacks as described above, and providing porosity with low lithium-ion tortuosity, which enables high loading and high utilization of chalcogenide active material during the electrochemical operation, with increased cell energy and decreased presence of dead volume/weight within cells.

This object is solved by a 3D porous chalcogenide body, and a method for preparing the same, for use in secondary batteries with features as described in the independent patent claims, wherein preferred embodiments are described by the dependent claims.

An important aspect of the present invention is an advanced use of nanotechnologies to generate an ordered self-standing wafer-like structure from chalcogenide-based active materials and more preferably from variety of sulfur allotropes, which exhibit hierarchical porosities as these techniques allow it to minimize the dead volume/weight content of non-active materials within an electrochemical cell.

What is proposed is a 3D porous chalcogenide body/wafer having an ion tortuosity factor ≤3 and porosity ≤35% while having a redox active mass content ≥82 wt. %, as well as a method for preparing a 3D chalcogenide material. An important aspect of the invention is using selectively induced allotropic transitions of the redox active chalcogenide material which changes it physicochemical properties in such a way that in a subsequent post-processing step, involving selective removal/wash/etching out of a significant fraction of the soluble crystalline allotrope or allotropes leaving behind the insoluble glass/polymeric/amorphous allotrope or allotropes along with some residual/seeding crystalline allotrope or allotropes embedded within the glass/polymeric/amorphous allotrope and or allotropes. After a subsequent annealing step of the post processed electrode, a specific ratio between the glass/polymer/amorphous and crystalline allotropes is maintained within the 3D porous glass-crystalline chalcogenide body that can be used as an electrode body for use in secondary batteries.

The chalcegonide body is prepared by providing a chalcogenide-based substrate, structuring the substrate in a defined, projected pattern by means of high-energy irradiation, into volumes of irradiation treated, allotrope transitioned, and non-treated/projected chalcogenide material, wherein the high-energy irradiation is directed onto the substrate in an orientation largely perpendicular to the widest extension of the substrate, thus making the volumes of irradiation treated chalcogenide material extending perpendicularely to the widest extension of the substrate as well, at least partially etching/removing either of the volumes of crystalline allotropes to create defined voids within the substrate and to provide seed crystals originating from the residual crystalline chalcogenide allotropes left after selective etching/removal, and incubating the substrate to a reach a desired ratio between the glass/polymeric/amorphous and crystalline allotropes

The advantage of the chalcegonide body according to the present invention is, that a specific, tailored, ordered porosity within the glass-crystalline wafer-like substrate can be created, with low lithium-ion tortuosity, which enables high loading and high active mass utilization of chalcogenide/sulfur, during the electrochemical operation. This is possible via the enhancement of redox active areas of reaction between charge carriers, electrons, active material and improving the tailored accessibility of the active material to the electrolyte by inducing an ordered porosity, oriented largely perpendicular to the widest extension of the substrate, i.e. the current collector, if applicable. This allows for the fabrication of high Crate capable chalcogenide-based electrodes with areal capacities beyond the 8 mAh/cm², which significantly enhances the energy density of the Li-S batteries provided therewith.

Patent application WO2021233965A1 describes a method of chalcogenide monolithic wafer formation from a mother liquid wherein during the growth of a monolithic wafer, crystalline allotrope phase/phases of sulfur are grown from the mother liquid having a certain porosity, which is generated during the growth process. The porosity generation is part of the growing process of the chalcogenide monolithic substrate/wafer, therefore.

The process as described is referred to as the direct crystal imprinting (dci) method, wherein the mother liquid can be any organic solvent capable of dissolving a high weight percentage of sulfur (≥5 weight%) or, alternatively, molten sulfur. Despite creation of a hierarchical porosity in the wafer being part of the growth process, the control over the distribution and volume percentage of this porosity is highly limited.

The present invention relies fundamentally on the principle of precise control over the distribution and volume fraction of porosity within the, preferably monolithic, chalcogenide wafer by means of photo lithography and or electron lithography. This can be achieved in various ways.

The crystalline allotropes of chalcogenides, preferably sulfur, are known to undergo a phase/allotrope/structural transformation into a polymeric/amorphous/glassy state, which is insoluble within organic solvents, whereas the crystalline phases/allotropes/structures are soluble. Therefore, in a preferred embodiment of the present invention, the step of structurally patterning the glass/crystalline chalcogenide wafer/substrate comprises the step of the electron/photon irradiation induced phase/allotrope/structural transformation within the irradiated chalcogenide material, also called the negative resist method, into non soluble, glassy/polymeric/amorphous allotropic forms of chalcogenide material, and in a second step etching/removing the non-irradiated crystalline allotropes of chalcogenide materials by washing the substrate with a suitable organic solvent like carbon disulfide (CS₂), while maintaining the irradiated phase/allotrope/structural transformed chalcogenide material of the substrate.

The post processing of an already grown monolithic chalcogenide/sulfur substrate or wafer, by subjecting it to photon/electron irradiation for porosity generation and etching the crystalline domains by means of an organic solvent, is an advantageous way of generating tuneable and tailored open pore volume/porosity within the chalcogenide/sulfur substrate. The chalcogenide/sulfur which is irradiated will become polymeric/glass/amorphous allotrope and will stay on the surface while the non-irradiated area stays crystalline and will be the removable template or porogen that will be etched away in the organic solvent.

Sulfur exists mainly in its orthorhombic phase (8 atoms of sulfur in a 8-member ring shape) and can undergo multiple allotrope/structural transitions. When subjecting sulfur to high intensity blue/UV light (430 to 250 nm), sulfur - sulfur bonds will break, creating radical parts on some atoms of sulfur. Those high reactive species will then react with other atoms of sulfur, forming a long chain of sulfur atoms also known as polymeric sulfur. The latter is not soluble in solvents like CS₂ where orthorhombic sulfur is highly soluble (~ 33 %wt). Hence, the irradiated part remains, thus acting as the negative resist and the crystalline part which is dissolved thus acts as the porogen. This method consists in the irradiation of sulfur, preferably with a laser of wavelength in the blue/UV region to start the photo/thermal induced polymerization of sulfur in a predefined pattern. The crystalline part within the chalcogenide wafer is then washed with a suitable organic solvent capable of dissolving sulfur, like, but not limited to, Toluene or CS₂ to remove the non-irradiated crystalline sulfur while keeping the irradiated polymeric/amorphous sulfur.

The allotrope transition allows for the porosity generation as described above along with an active material recovery, for example by using any organic solvent capable of dissolving chalcogenide/sulfur, like Dowtherm^{™}, for porosity generation and then recovering the dissolved chalcogenide/sulfur by changing the temperature or the pressure of the solvent to change the chalcogenide/sulfur solubility within the solvent.

In addition, the chalcogenide being subjected to photon/electron beam irradiation can further contain additional monomer and/or monomers, capable of cross-linking with the chalcogenide/sulfur, wherein the weight fraction of the additive monomer/s lies between 0 to 20 weight percent. Upon irradiation, the crosslinking between the chalcogenide/sulfur and additional monomer/s occurs and leads to the formation of co-polymeric chalcogenide/sulfur, thus aiding in further determining/controlling the weight fraction of polymeric/amorphous chalcogenide/sulfur.

A key aspect of the invention described herein lies in the versatility of the starting chalcogenide/sulfur geometry/configuration.

For example, but not limited to, the initial substrate for the cathode preparation can be a monolithic chalcogenide crystal grown via any crystal growing method, for example but not limited to the dci method described above or the Czochralski method, i.e. a large crystal with the dimensions beyond those usable within standard coin or pouch cells, wherein the grown crystal is then subjected to laser cutting to obtain the chalcogenide/sulfur substrate/wafer of desirable dimensions followed by photon/electron induced structural patterning to introduce hierarchical and tailored porosity.

In another embodiment, the starting chalcogenide/sulfur substrate can also be a slurry coated chalcogenide/sulfur cathode with ≥99 wt% of chalcogenide/sulfur with or without a current collector foil.

The size of the final domains after photon/electron irradiation and solvent etching active material domains preferably lies within the range of 50 nm to 50 µm, or 100 nm to 10 µm in lateral size of the substrate/wafer, or more preferably 5 µm, and the final substrate/wafer thickness is between 1 to 500 µm, more preferably 200 µm.

An important aspect of this invention is the lithium-ion tortuosity number within the substrate/electrode/cathode, where this number is ideally ≤5. An electrode/cathode prepared with a substrate according to the present invention should exhibit porosity within the range of 15-45%, more preferably ≤30% which will allow a good interface between the electrolyte and the domains of chalcogenide/sulfur. In addition, the generated porosity is sufficient to compensate the volumetric expansion of chalcogenide/sulfur upon cycling.

The resulting areal capacity is ≥ 6 mAh/cm² and more preferably ≥ 12 mAh cm⁻², which amounts to an areal loading of approximately ≥ 7.16 mg cm^{- 2}.

As the source of irradiation, photons and/or electrons can be used, wherein the wavelength of photons preferably lies within the range of gamma radiation to UVA nm and more preferably within the range between 150 nm to 405 nm which is energetic enough to lead to phase change of chalcogenide/sulfur, i.e. ring opening of sulfur rings and formation of long chains of sulfur, i.e. polymeric sulfur, which typically forms thermally above 160 °C.

Hence, as an important advantage irradiation induced phase change can be carried out at room temperature, without requiring the need to additionally heating the monolithic wafer externally.

In addition, the irradiation induced allotropic change is beneficial in terms of obtaining higher weight fractions of polymeric/amorphous phase of chalcogenide/sulfur versus crystalline phase, as opposed to thermally introduced phase changes.

Preferably, the photon/electron irradiation is provided by means of a laser beam with a wavelength between 250 and 430 nanometres, chosen for the absorbance and sensitivity of sulfur in this range. This meticulous laser treatment serves the dual purpose of establishing nano/microdomains and optimizing porosity, which are critical features for an effective Li-S battery cathode. Within this intricate process, the utilization of a photomask coated with chromium is a viable option, offering an additional layer of control and precision to the structural patterning of the chalcogenide/sulfur substrate. This technique enables an even more structured application of the laser beam, creating well-defined patterns and regions with varying chalcogenide/sulfur particle sizes and porosities, specifically tailored.

Using a device such as a galvo head, i.e. a galvanometer scanner system, with its ability to rapidly and accurately steer laser beams over a material's surface and being capable of multi-dimensional movement, more preferably 3-dimensional movement along x, y, z axis, a laser beam of specific spot size is moved over the, preferably monolithic, substrate or wafer in a predefined manner, such that a specific pattern can be projected onto the surface of monolithic chalcogenide substrate/wafer. The laser beam will hit the chalcogenide/sulfur substrate or wafer from the top and the desired pattern is applied, preferably in an orientation perpendicular to the widest extension of the substrate and/or current collector foil if applicable.

Use of a photomask coated with chromium may optionally be incorporated into the method depending on the application, offering an additional layer of control and precision. This technique enables the structured application of the laser beam, creating well-defined patterns and regions with varying chalcogenide/sulfur particle sizes and porosities, specifically tailored.

After the etching process, the obtained substrate/wafer may be subjected to incubation at higher temperatures, more preferably 98 °C in order to tailor the content and distribution of the polymer/glassy chalcogenide/sulfur against the crystalline chalcogenide/sulfur wherein the crystalline sulfur allotrope is preferably monoclinic beta or gamma.

By harvesting metastable allotropes of the same material and more specifically of sulfur allotropes by incubating the glass/crystalline sulfur/chalcogenide body, a ratio between the crystalline and glass/amorphous allotropies constantly changes in respect to its most thermodynamically stable orthorhombic alpha-sulfur.

The structurally patterned substrate may subsequently be covered with a conducting transition layer interface such as a transparent graphene oxide layer, preferably by electrostatic driven self-assembly, dip and/or spray coating, wherein after application, the graphene oxide layer is converted into a reduced graphene oxide transition interface layer which is covalently bound to the chalcogenide-based substrate.

Covering the substrate with a transition layer preferably comprises the step of providing high energy radiation to the transparent graphene oxide layer coated onto the chalcogenide-based substrate and exposing it to photon/electron radiation of suitable energy, wherein the graphene oxide reacts with the glass/amorphous/polymeric chalcogenide material of the substrate during the irradiation process and leads to ring opening polymerization of the chalcogenide material along with the in-situ de-oxygenation/partial reduction of graphene oxide to reduced graphene oxide.

Furthermore, the substrate may be covered by a second layer of 2D material, wherein the 2D material preferably is a graphene oxide/metal composite.

These meticulous steps in managing sulfur domain size, optimizing porosity, and integrating a protective coating are crucial for the development of a high-performance chalcogenide/sulfur electrodes and more specifically cathodes that can unlock the full potential of Li-S batteries, offering an efficient and sustainable solution for advanced energy storage systems.

The chalcogenide material substrate may be composed of one or more chalcogenide elements, as a compound and/or as co-crystallized components, such that each element maintains its crystal structure and/or doped chalcogenide, wherein small domains of doping of the main chalcogenide element by another chalcogenide exist.

The invention is also directed at a cathode, prepared using a electrode body substrate/wafer made as described above, designed specifically for the application in Li-S battery systems, relying upon precise control of microstructure and porosity engineering of the cathode to ensure the accessibility of sulfur to the electrolyte and its suitability for integration into the electrochemical cells.

Further elements and advantages of the present invention can be taken for the following description of figures attached hereto, which are for descriptive purposes only without restricting the scope of the inventions as defined by the patent claims in any way; the figures showing:
- Fig. 1a: a simplified schematic side view depiction of a chalcogenide wafer after being subjected to allotrope transition photo lithography in a defined pattern;
- Fig. 1b: a top view depiction of the chalcogenide wafer of Fig. 1a;
- Fig. 1c: a simplified schematic side view depiction of the irradiated chalcogenide wafer of fig. 2a and 2b after being subjected to etching;
- Fig. 1d: a top view depiction of the chalcogenide wafer of Fig. 1c;
- Fig. 2a: a simplified schematic side view depiction of a chalcogenide wafer after being subjected to allotrope transition through photo lithography with spot polymerization;
- Fig. 2b: a top view depiction of the chalcogenide wafer of Fig. 2a;
- Fig. 2c: a simplified schematic side view depiction of the irradiated chalcogenide wafer of fig. 2a and 2b after being subjected to etching;
- Fig. 2d: a top view depiction of the chalcogenide wafer of Fig. 2c; and
- Fig. 3: a simplified method step chart for the fabrication of an electrode body wafer from a chalcogenide substrate using photo lithography.

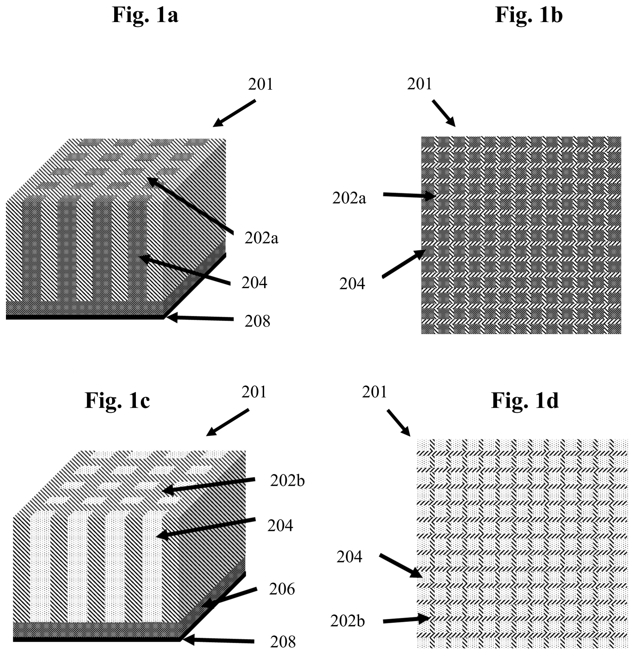

Figure 1a, b, show a simplified schematic side and top view depiction of a chalcogenide/sulfur substrate/wafer 201 after being subjected to photo lithography by means of a laser/electron beam, using an in-direct writing or allotrope transition technique to induce a transition of crystalline 202a to polymeric chalcogenide 204 with a pattern transfer, raster scanning the substrate/wafer. The substrate/wafer can be supported by a second substrate 208 that can be a chalcogenide or carbon based 0D, 1D, 2D or 3D or any metallic/semi-metallic/semi-conductor/insulating material, being connected to the substrate 201 by residual crystalline sulfur 206 which acts a binder.

Figure 1c and d show the substrate/wafer 201 of Figs. 1a and b after solvent etching of the substrate/wafer to remove the crystalline sulfur which acts as porogen, leaving behind voids 202b, polymer chalcogenide 204, and residual crystalline sulfur 206 which acts as a binder to the substrate 208.

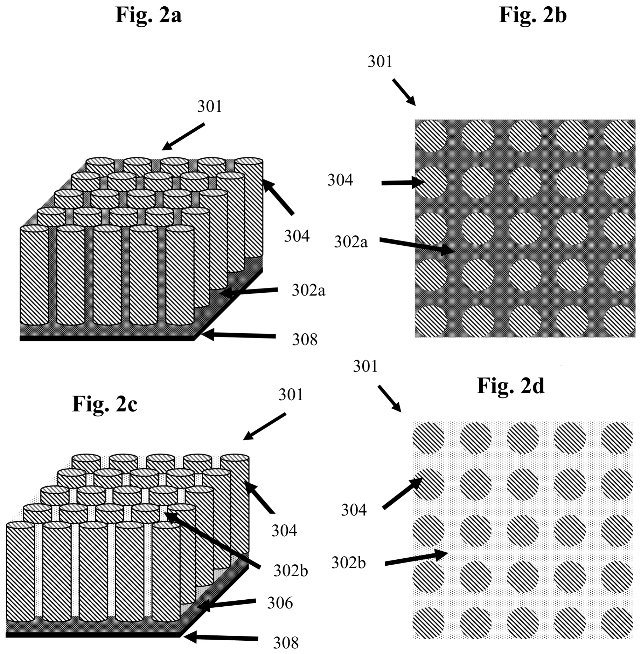

Figures 2a, b, c and d show generally the same chalcogenide/sulfur substrate/wafer 301 as Figs 1a through d. The difference is that the /substrate wafer 301 in this embodiment has been subjected to photo lithography using a laser/electron beam with a specific laser spot size, wherein, the laser/electron beam created a spot-based pattern transfer instead of raster scanning the substrate/wafer, to induce a transition of crystalline 302a to polymeric chalcogenide 304 this time in the form of rounded columns according to the spot size of the laser beam used, leaving behind voids 302b between the columns 304 after the substrate/wafer 301 was etched in a suitable solvent, and the non-radiated, crystalline chalcogenide material. The substrate/wafer can be supported by a second substrate 308 that can be a chalcogenide or carbon based 0D, 1D, 2D or 3D or any metallic/semi-metallic/semi-conductor/insulating material, being connected to the substrate 301 by residual crystalline sulfur 306 which acts a binder.

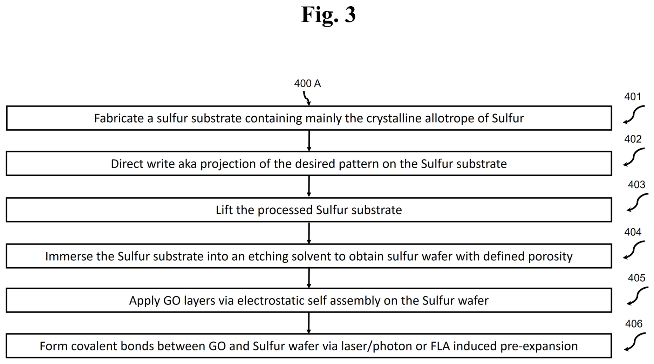

Figure 3 shows a simplified flow chart of the process steps of a chalcogenide wafer formation using any chalcogenide substrate 401 which mainly consists of crystalline chalcogenide allotrope, followed by a desired pattern transfer 402 on to the chalcogenide substrate, after which the chalcogenide substrate is lifted 403 and transferred to a solvent capable of dissolving chalcogenide such that the etching of crystalline chalcogenide takes place 404 leaving behind the polymeric chalcogenide allotrope and residual crystalline chalcogenide allotrope. This is followed by Graphite Oxide (GO) coating 405 and irradiation induced chemical bond formation between the chalcogenide and GO 406 to prolong the cycle life of polymeric chalcogenide.

## Claims

1. A 3D self-standing chalcogenide body for use in electrodes of secondary batteries, comprising a chalcogenide-based substrate (201, 301), exhibiting a hierarchical porosity originating from:
a. a partial high-energy irradiation induced allotrope transition of the chalcogenide substrate (201, 301) from crystalline allotropes (202a, 303a) to glass/polymeric/amorphous allotropes (204, 304) in a defined pattern of volumes of allotrope transitioned, and non-transitioned chalcogenide material,
b. subsequent selective removal/etching of crystalline allotropes (202a, 303a) to create defined voids, leaving the glass/polymeric/amorphous allotropes (204, 304) intact, with residual crystalline chalcogenide allotropes providing seed crystals left after selective etching/removal, and
c. incubation of the substrate (201, 301) to re-grow crystalline chalcogenide and reach a desired ratio between glass/polymeric/amorphous allotropes (204, 304) and crystalline allotropes (202a, 303a).

2. The chalcogenide body according to claim 1, wherein the volumes of high-energy irradiation induced, allotrope transitioned, and non-transitioned chalcogenide material extend largely perpendicular to the widest extension of the substrate (201, 301).

3. The chalcogenide body according to any of claims 1 or 2, wherein the substrate (201, 301) is a monolithic chalcogenide mono- and/or poly-crystalline body grown via any suitable crystal growing method.

4. The chalcogenide body according to claim 3, wherein the substrate (201, 301) is grown via the Czochralski method, creating a large crystal, which is cut to obtain a substrate of desired dimensions.

5. The chalcogenide body according to claim 3, wherein the substrate (201, 301) is grown via the direct crystal imprinting (dci) method, with a crystal material being grown from a mother liquid, which is either an organic solvent with more than 5 weight percentage of chalcogenide material dissolved in it, or molten chalcogenide material.

6. The chalcogenide body according to claims 1 or 2, wherein the substrate (201, 301) is a slurry-based chalcogenide material with ≥99 wt% of chalcogenide material coated onto a current collector foil.

7. The chalcogenide body according to any of the preceding claims, wherein the thickness of the substrate (201, 301) is between 1µm and 500µm.

8. The chalcogenide body according to claim 7, wherein the thickness of the substrate (201, 301) is 200µm.

9. The chalcogenide body according to any of the preceding claims, wherein the substrate (201, 301) is covered with a conducting transition layer interface, covalently bound to the chalcogenide substrate (201, 301).

10. The chalcogenide body according to claim 9, wherein the substrate (201, 301) is covered by a second layer of 2D material.

11. The chalcogenide body according to claim 10, wherein the 2D material is a graphene oxide/metal composite.

12. The chalcogenide body according to any of the preceding claims, wherein the chalcogenide-based material is sulfur.

13. The chalcogenide body according to any of the preceding claims, wherein the substrate (201, 301) exhibits a porosity of ≤35%.

14. A cathode for use in secondary batteries, comprising a chalcogenide body according to any of claims 1 to 13.

15. The cathode according to claim 14, comprising ≥82% weight content of redox active material.

16. The cathode according to claim 14 or 15, having an electrode specific ion tortuosity factor of ≤5.

17. A battery comprising a cathode according to any of claims 14 to 16.

18. A method for preparing a 3D self-standing chalcogenide body with hierarchical porosity for use in cathodes of secondary batteries, comprising the steps of:
a. providing a chalcogenide-based substrate (201, 301), either as a monolithic chalcogenide mono and or poly-crystalline body grown via any suitable crystal growing method, or as a slurry-based chalcogenide material coated onto a current collector foil,
b. structuring the substrate (201, 301) in a defined, projected pattern by means of high-energy irradiation directed onto the substrate (201, 301) in an orientation largely perpendicular to the widest extension of the substrate (201, 301), into volumes of irradiation treated, allotrope transitioned glass/polymeric/amorphous allotropes (204, 304), and non-treated chalcogenide crystalline allotropes (202a, 303a),
c. at least partially etching/removing either of the volumes of crystalline allotropes (202a, 303a) to create defined voids within the substrate (201, 301) with the residual crystalline chalcogenide allotropes left after selective etching/removal providing seed crystals, and
d. incubating the substrate (201, 301) to a reach desired ratio between the glass/polymeric/amorphous (204, 304) and crystalline allotropes (202a, 303a).

19. Method according to claim 18, wherein the high-energy radiation is a photon irradiation.

20. Method according to any of claims 18 or 19, wherein the wavelength of high-energy radiation photon irradiation is within the range of gamma radiation and ultraviolet radiation.

21. Method according to claim 20, wherein the wavelength of high-energy radiation photon irradiation is within the range between 250 nm to 430 nm.

22. Method according to claim 21 wherein the wavelength of high-energy radiation photon irradiation is within the range between 150 nm to 405 nm.

23. Method according to any of claims 20 to 22, wherein a galvanometer scanner system is used to apply the photon/electron irradiation, capable of multi-dimensional movement, along at least x, y, z axis, providing a laser beam of specific spot size being moved over the substrate (201, 301) in a predefined manner.

24. Method according to claim 19, wherein a laser beams to apply the photon irradiation together with a photomask coated with chromium is used for a structured application of the laser beam to the substrate (201, 301).

25. Method according to any of claims 18 to 24, wherein the structurally patterned substrate (201, 301) is covered with a transparent graphene oxide layer by electrostatic driven self-assembly, dip and/or spray coating, wherein after application, the graphene oxide layer is converted into a reduced graphene oxide transition interface layer which is covalently bound to the chalcogenide-based substrate.

26. Method according to claim 25, wherein the substrate is covered by a second layer of 2D material.

27. Method according to claim 26, wherein the 2D material is a graphene oxide/metal composite.

28. Method according to any of claims 18 to 27, wherein the chalcogenide-based material is sulfur.
